# EUROPÄISCHE PATENTANMELDUNG

(11) **EP 4 473 815 A1**
(43) Veröffentlichungstag der Anmeldung: **11.12.2024**
(21) Anmeldenummer: 24168696.3
(22) Anmeldetag: 05.04.2024
(51) Int. Cl.: A01B 69/00, A01B 69/04, A01D 41/127

(54) **LANDWIRTSCHAFTLICHE ARBEITSMASCHINE MIT EINEM DETEKTIONSMODUL**

(30) Priorität: 06.06.2023 DE 102023114826
(71) Anmelder: CLAAS E-Systems GmbH, 49201 Dissen (DE)
(72) Erfinder: Uhlemann, Matthias, 49326 Melle (DE); Meyer zu Helligen, Lars Peter, 32139 Spenge (DE); Behmenburg, Jan, 58730 Fröndenberg (DE); Hemsen, Moritz, 59872 Meschede (DE); Monkenbusch, Robin, 33378 Rheda-Wiedenbrück (DE); Schoch, Bernd, 33334 Gütersloh (DE); Kruse, Alexander, 33818 Leopoldshöhe (DE)
(74) Vertreter: CLAAS Gruppe

(57) **Zusammenfassung**

Die vorliegende Erfindung betrifft eine landwirtschaftliche Arbeitsmaschine (1) zum Einsatz auf einem landwirtschaftlichen Feld (2), welches an einer Feldposition (3) wenigstens ein unbewegliches Hindernisobjekt (4) aufweist, wobei die landwirtschaftliche Arbeitsmaschine (1) eine Positionsbestimmungseinrichtung (5) zur satellitenbasierten Erfassung einer Position der landwirtschaftlichen Arbeitsmaschine (1) bezüglich des landwirtschaftlichen Feldes (2) aufweist.

Die vorliegende Erfindung beruht auf dem allgemeinen Gedanken, dass ein menschlicher Nutzer (8) der landwirtschaftlichen Arbeitsmaschine (1) eine Vorwarnung rechtzeitig vor einer möglichen Kollision mit einem unbeweglichen Hindernisobjekt (4) erhält.

## Beschreibung

Die vorliegende Erfindung betrifft eine landwirtschaftliche Arbeitsmaschine zum Einsatz auf einem landwirtschaftlichen Feld, welches an einer Feldposition wenigstens ein unbewegliches Hindernisobjekt aufweist, wobei die landwirtschaftliche Arbeitsmaschine eine Positionsbestimmungseinrichtung zur satellitenbasierten Erfassung einer Position der landwirtschaftlichen Arbeitsmaschine bezüglich des landwirtschaftlichen Feldes aufweist.

In der EP 3 384 243 B1 wird eine Routenplanung für eine landwirtschaftliche Maschine entlang eines landwirtschaftlichen Feldes beschrieben, wobei eine optimierte Folge von Positionskoordinaten auf dem landwirtschaftlichen Feld derart ermittelt wird, dass ein vollständiger flächendeckender Pfad bezüglich entlang landwirtschaftlichen Feldes erzeugt wird.

Gemäß der EP 3 384 243 B1 zeichnet sich ein typisches landwirtschaftliches Feld zwar dadurch aus, dass es sich um ein in der Regel willkürlich und nicht konvex geformtes geschlossenes Gebiet mit möglicherweise geneigtem Gelände, im Allgemeinen willkürlich geformten Feldgrenzen und verbotenen Innenbereichen um Bäume, Steine, Teiche, Strommasten, Masten aufweist, die nicht für die Bepflanzung geeignet sind, jedoch wird lediglich konkretisiert, dass die Fahrspuren mittels der Routenplanung derart erzeugt werden, dass Bäume umrundet werden, wenn die landwirtschaftliche Maschine entlang Fahrspuren fährt. Besonders problematisch ist es jedoch, wenn eine Abweichung von diesen Fahrspuren um die Bäume, beispielweise aufgrund von Ermüdungserscheinungen und/oder wetterbedingter schlechter Sichtweite eines menschlichen Nutzers der landwirtschaftlichen Maschine auftritt und dadurch eine nachteilige Kollision mit diesem Baum erfolgt.

Der vorliegenden Erfindung liegt die Aufgabe zugrunde, eine verbesserte landwirtschaftliche Arbeitsmaschine anzugeben, die möglichen Kollisionen mit unbeweglichen Hindernisobjekten auf dem landwirtschaftlichen Feld entgegengewirkt.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass ein menschlicher Nutzer der landwirtschaftlichen Arbeitsmaschine eine Vorwarnung rechtzeitig vor einer möglichen Kollision mit einem unbeweglichen Hindernisobjekt erhält.

Die erfindungsgemäße landwirtschaftliche Arbeitsmaschine zum Einsatz auf einem landwirtschaftlichen Feld ausgebildet. Dieses landwirtschaftliche Feld kann ein landwirtschaftlich genutzter Erdboden sein, der regelmäßig bearbeitet und mit einer Feldfrucht bestellt wird. Das landwirtschaftliche Feld weist wenigstens ein unbewegliches Hindernisobjekt an einer Feldposition des landwirtschaftlichen Feldes auf. Dieses unbewegliches Hindernisobjekt kann derart an der Feldposition mit dem landwirtschaftlichen Feld verbunden sein, dass dieses Hindernisobjekt nicht zerstörungsfrei mittels einer landwirtschaftlichen Arbeitsmaschine an eine andere Feldposition des landwirtschaftlichen Feldes transportiert werden kann.

Das unbewegliche Hindernisobjekt kann ein Freileitungsmast, ein Strommast und/oder ein Hochspannungsmast zur für die Aufhängung von elektrischen Freileitungen sein. Der Freileitungsmast kann als Tragmast, Abspannmast, Weitabspannmast, Verdrillmast, Masttrenner, Endmast und/oder Abzweigmast ausgebildet sein. Zusätzlich oder alternativ kann der Freileitungsmast als Holzmast, Betonmast, Stahlrohrmast und/oder Gittermast ausgebildet sein. Zusätzlich oder alternativ kann der Freileitungsmast als Portalmast, Deltamast, Einebenenmast, Donaumast, Dreiebenenmast, Tonnenmast, Tannenbaummast und/oder Kompaktmast ausgebildet sein.

Die landwirtschaftliche Arbeitsmaschine weist eine Positionsbestimmungseinrichtung zur satellitenbasierten Erfassung einer Position der landwirtschaftlichen Arbeitsmaschine bezüglich des landwirtschaftlichen Feldes auf. Die Positionsbestimmungseinrichtung kann zur Positionsbestimmung mittels Satellitennavigationssignalen ausgebildet und/oder programmiert sein, um beispielsweise Positionsdaten bereitstellen. Hierbei kann wenigstens eine Satellitenvorrichtung zur Positionsbestimmung der landwirtschaftlichen Arbeitsmaschine bezüglich landwirtschaftlichen Feldes eingesetzt werden. Die Satellitenvorrichtung kann einen und/oder mehrere GNSS-Satelliten umfassen. Die Satellitenvorrichtung kann NAVSTAR-GPS-, GLONASS-, Galileo, Beidou-, GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer stationären Bodenstation eingesetzt wird, um die Position der landwirtschaftlichen Arbeitsmaschine auf dem landwirtschaftlichen Feld zu ermitteln. Hierbei kann die stationäre Bodenstation außerhalb des landwirtschaftlichen Feldes angeordnet sein.

Die Feldposition des unbeweglichen Hindernisobjektes ist in einem Datenbanksystem, insbesondere einem computerbasierten Datenbanksystem, hinterlegt. In diesem Datenbanksystem können mehrere Feldpositionen mehrere unbeweglicher Hindernisobjektes eines landwirtschaftlichen Feldes und/oder mehrere landwirtschaftlicher Felder hinterlegt sein.

Die landwirtschaftliche Arbeitsmaschine weist ein Detektionsmodul auf, welches dazu vorgesehen und eingerichtet ist, insbesondere ausgebildet und/oder programmiert ist, in Abhängigkeit der in dem Datenbanksystem hinterlegten Feldposition des unbeweglichen Hindernisobjektes und der mittels der Positionsbestimmungseinrichtung erfassten Position der landwirtschaftlichen Arbeitsmaschine für einen menschlichen Nutzer der landwirtschaftlichen Arbeitsmaschine eine Vorwarnung mittels einer Vorwarnungsvorrichtung zu initiieren, insbesondere steuerungstechnisch und/oder regelungstechnisch zu initiieren und/oder auszulösen. Das Detektionsmodul kann als Detektionsvorrichtung ausgebildet sein und/oder eine Recheneinheit aufweisen.

Das Detektionsmodul kann kommunizierend mit der Positionsbestimmungseinrichtung und/oder kommunizierend mit der Vorwarnungsvorrichtung verbunden sein. Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden.

Der menschliche Nutzer der landwirtschaftlichen Arbeitsmaschine erhält diese Vorwarnung rechtzeitig vor einer möglichen Kollision mit einem unbeweglichen Hindernisobjekt und kann daher rechtzeitig einer Kollision entgegenwirken. Dies Unterstütz den menschlichen Nutzer der landwirtschaftlichen Arbeitsmaschine insbesondere Ermüdungserscheinungen und/oder wetterbedingter schlechter Sichtweite. Hierdurch wird sowohl die landwirtschaftliche Arbeitsmaschine als auch das unbewegliche Hindernisobjekt vor einer sehr nachteiligen Beschädigung aufgrund einer Kollision geschützt. Insbesondere falls das unbewegliche Hindernisobjekt als Freileitungsmast ausgebildet ist, wird ein verbesserter Schutz von elektrischen Leitungen, die über dem landwirtschaftlichen Feld positioniert sind, ermöglicht.

Bei einer vorteilhaften Weiterbildung der erfindungsgemäßen Lösung ist vorgesehen, dass dass das Detektionsmodul die Vorwarnung mittels der Vorwarnungsvorrichtung initiiert, falls eine Beabstandung zwischen der Feldposition des unbeweglichen Hindernisobjektes und der Position der landwirtschaftlichen Arbeitsmaschine einen Grenzwert unterschreitet.

Das Detektionsmodul kann dazu vorgesehen und eingerichtet sein, insbesondere ausgebildet und/oder programmiert sein, diesen Grenzwert in Abhängigkeit von Eigenschaften, insbesondere Einstellungsparametern, der landwirtschaftliche Arbeitsmaschine und/oder in Abhängigkeit von Eigenschaften, insbesondere der Ausgestaltung, des unbeweglichen Hindernisobjekts einzustellen und/oder auszuwählen. Dies hat den Vorteil, bei geometrisch kleineren Ausgestaltungen der landwirtschaftlichen Arbeitsmaschine und des unbeweglichen Hindernisobjekts kleinere Grenzwerte einsetzbar sind, während im Vergleich hierzu bei einer landwirtschaftlichen Arbeitsmaschine mit größeren geometrischen Ausgestaltungen dieser Grenzwert höherer eingestellt werden sollte, um ausreichend frühzeitig den menschlichen Nutzer vor einer Kollision zu warnen.

Bei einer vorteilhaften Weiterbildung der erfindungsgemäßen Lösung ist vorgesehen, dass das Detektionsmodul die in der Datenbanksystem hinterlegte Feldposition des unbeweglichen Hindernisobjektes mit einem zweidimensionalen Modell, insbesondere mit einem in eine zweidimensionale Ebene projizierten dreidimensionalen Modell, des unbeweglichen Hindernisobjektes verknüpft und die Vorwarnung mittels der Vorwarnungsvorrichtung initiiert, falls die mittels der Positionsbestimmungseinrichtung erfasste Position der landwirtschaftlichen Arbeitsmaschine innerhalb des Bereiches des zweidimensionalen Modells des unbeweglichen Hindernisobjektes liegt und/oder falls eine Beabstandung zwischen dem des zweidimensionalen Modell des unbeweglichen Hindernisobjektes und der Position der landwirtschaftlichen Arbeitsmaschine einen Grenzwert unterschreitet.

Das zweidimensionale Modell kann im einfachsten Fall eine geschlossene Kurve, insbesondere ein Kreis oder eine ovale Kurve, sein, innerhalb derer die Feldposition des unbeweglichen Hindernisobjektes angeordnet ist. Die Abmessungen der geschlossenen Kurve kann von der geometrischen Ausgestaltung des unbeweglichen Hindernisobjektes abhängig ausgewählt sein.

Das zweidimensionale Modell des unbeweglichen Hindernisobjektes kann ein digitales Model sein, insbesondere basierend auf der geometrischen Ausgestaltung des unbeweglichen Hindernisobjektes.

Das Detektionsmodul kann dazu vorgesehen und eingerichtet sein, insbesondere ausgebildet und/oder programmiert sein, die Größe des zweidimensionalen Modells des unbeweglichen Hindernisobjektes und/oder den Grenzwert in Abhängigkeit von Eigenschaften, insbesondere Einstellungsparametern, der landwirtschaftliche Arbeitsmaschine und/oder in Abhängigkeit von Eigenschaften, insbesondere der Ausgestaltungseigenschaften, des unbeweglichen Hindernisobjekts einzustellen und/oder auszuwählen.

Bei einer vorteilhaften Weiterbildung der erfindungsgemäßen Lösung ist vorgesehen, dass die Positionsbestimmungseinrichtung dazu vorgesehen und eingerichtet ist, insbesondere ausgebildet und/oder programmiert ist, einen Qualitätswert bezüglich der satellitenbasierten Erfassung der Position der landwirtschaftlichen Arbeitsmaschine zu ermitteln und dem Detektionsmodul diesen Qualitätswert zu übermitteln, wobei das Detektionsmodul dazu vorgesehen und eingerichtet ist, den Grenzwert bezüglich der Beabstandung und/oder den Bereich des zweidimensionalen Modells in Abhängigkeit des Qualitätswertes anzupassen. Der Qualitätswert kann sich auf die Genauigkeit der satellitenbasierten Erfassung beziehen.

Bei einer vorteilhaften Weiterbildung der erfindungsgemäßen Lösung ist vorgesehen, dass das bezüglich des landwirtschaftlichen Feldes unbewegliche Hindernisobjekt einen Freileitungsmast ausbildet.

Bei einer vorteilhaften Weiterbildung der erfindungsgemäßen Lösung ist vorgesehen, dass die landwirtschaftliche Arbeitsmaschine eine Fahrerkabine für den menschlicher Nutzer aufweist, wobei in der Fahrerkabine die Vorwarnungsvorrichtung ausgebildet ist, die dazu vorgesehen als auch eingerichtet ist, bei einer Initiierung durch das Detektionsmodul innerhalb der Fahrerkabine eine für den menschlichen Nutzer akustisch und/oder optisch erfassbare Vorwarnung zu erzeugen. Hierfür kann die Vorwarnungsvorrichtung innerhalb der Fahrerkabine ein Display und/oder einen Monitor und/oder ein Soundsystem zur Erzeugung der für den menschlichen Nutzer akustisch und/oder optisch erfassbare Vorwarnung aufweisen. Hierdurch wird sichergestellt, dass der menschlichen Nutzer frühzeitig auf kritische Situationen aktiv hingewiesen wird und daher rechtezeitig aktiv einer Kollision mit dem unbeweglichen Hindernis entgegenwirken kann.

Bei einer vorteilhaften Weiterbildung der erfindungsgemäßen Lösung ist vorgesehen, dass ein Navigationssystem dazu vorgesehen und eingerichtet ist, insbesondere ausgebildet und/oder programmiert ist, die in dem Datenbanksystem hinterlegte Feldposition des unbeweglichen Hindernisobjektes als Point of Interest (POI) in einer digitalen Karte des landwirtschaftlichen Feldes, auf welchem sich die landwirtschaftliche Arbeitsmaschine im Einsatz befindet, für den menschlicher Nutzer optisch sichtbar darzustellen. Das Navigationssystem kann innerhalb der Fahrerkabine der landwirtschaftlichen Arbeitsmaschine ein Display und/oder einen Monitor zur Routenplanung und/oder zur optischen Darstellung einer geplanten Route entlang des landwirtschaftlichen Feldes aufweisen, wobei das unbewegliche Hindernisobjekt als POI im Bereich der geplanten Route für den menschlichen Nutzer optisch erfassbar angezeigt wird. Hierdurch wird ermöglicht, dass der menschlichen Nutzer frühzeitiger auf kritische Situationen aktiv hingewiesen wird und im Vorhinein eine möglicherweise unpassende Routenplanung erkennen kann.

Bei einer vorteilhaften Weiterbildung der erfindungsgemäßen Lösung ist vorgesehen, dass das Datenbanksystem ein externes Datenbanksystem außerhalb der landwirtschaftlichen Arbeitsmaschine ausbildet, und/oder dass das Datenbanksystem ein internes Datenbanksystem innerhalb der landwirtschaftlichen Arbeitsmaschine ausbildet. Dieses Datenbanksystem kann einen Datenspeicher, insbesondere einen Datenspeicher mit einer maschinell lesbaren Kodierung als Speicherart, aufweisen und/oder kann als computerbasiertes Datenbanksystem ausgebildet sein. Das externe Datenbanksystem außerhalb der landwirtschaftlichen Arbeitsmaschine kann außerhalb des landwirtschaftlichen Feldes ausgebildet sein.

Die landwirtschaftliche Arbeitsmaschine kann dazu vorgesehen und eingerichtet, insbesondere ausgebildet und/oder programmiert, sein, mit dem externen Datenbanksystem für eine Datenübertragung zu kommunizieren, insbesondere kabellos zu kommunizieren, und/oder eine Teilmenge der im externen Datenbanksystem hinterlegten Feldpositionen, insbesondere die des landwirtschaftlichen Feldes, auf dem die landwirtschaftliche Arbeitsmaschine eingesetzt wird, zu erfassen und in der internen Datenbank innerhalb der landwirtschaftlichen Arbeitsmaschine zu speichern.

Bei einer vorteilhaften Weiterbildung der erfindungsgemäßen Lösung ist vorgesehen, dass die landwirtschaftliche Arbeitsmaschine als selbstfahrende landwirtschaftliche Arbeitsmaschine, insbesondere als selbstfahrender Feldhäcksler oder als selbstfahrender Mähdrescher, für den landwirtschaftlichen Einsatz auf dem landwirtschaftlichen Feld ausgebildet ist.

Bei einer vorteilhaften Weiterbildung der erfindungsgemäßen Lösung ist vorgesehen, dass die landwirtschaftliche Arbeitsmaschine als Traktor, insbesondere als Traktor mit einem Anbaugerät, für den landwirtschaftlichen Einsatz auf dem landwirtschaftlichen Feld ausgebildet ist.

Bei einer vorteilhaften Weiterbildung der erfindungsgemäßen Lösung ist vorgesehen, dass sich die im Datenbanksystem hinterlegte Feldposition des unbeweglichen Hindernisobjektes auf einen Teilbereich, insbesondere lediglich auf einen Teilbereich, dieses unbeweglichen Hindernisobjektes bezieht. Ein unbeweglichen Hindernisobjekt kann einerseits für eine Kollision sehr kritische Teilbereich aufweisen und anderseits für eine Kollision unkritische Teilbereich aufweisen. Durch diese Reduzierung der Daten des Datenbanksystems wird die erforderlichen Datenspeichermenge reduziert als auch die Verarbeitung der Daten beschleunigt.

Bei einer vorteilhaften Weiterbildung der erfindungsgemäßen Lösung ist vorgesehen, dass sich die im Datenbanksystem hinterlegte Feldposition des unbeweglichen Hindernisobjektes auf einen Mastschaft eines Freileitungsmasts bezieht. Ein Freileitungsmast umfasst einen Mastschaft, der mit einem Ende im Erdboden des landwirtschaftlichen Feldes angeordnet ist und mit einem weiteren Ende vom Erdboden des landwirtschaftlichen Feldes beabstandet ist. Ein solcher Freileitungsmasts kann eine Traverse oder mehrere Traverse zur Halterung von elektrischen Leitungen aufweisen. In vielen Fällen sind die Traversen bezüglich des Erdbodens des landwirtschaftlichen Feldes derart hoch angeordnet, dass diese Traversen in den meisten Fällen zu keiner Kollision mit der landwirtschaftlichen Arbeitsmaschine führen können. Durch diese Reduzierung der Daten des Datenbanksystems wird die erforderlichen Datenspeichermenge reduziert als auch die Verarbeitung der Daten beschleunigt. Außerdem wird hierdurch die Hinterlegung und/oder Erfassung von relevanten Konstruktionsdaten für Freileitungsmasten vereinfacht.

Ferner betrifft die Erfindung ein Detektionsmodul der erfindungsgemäßen landwirtschaftliche Arbeitsmaschine, welches dazu vorgesehen und eingerichtet ist, in Abhängigkeit der in dem Datenbanksystem hinterlegten Feldposition des unbeweglichen Hindernisobjektes und der mittels der Positionsbestimmungseinrichtung erfassten Position der landwirtschaftlichen Arbeitsmaschine für einen menschlichen Nutzer der landwirtschaftlichen Arbeitsmaschine eine Vorwarnung mittels einer Vorwarnungsvorrichtung zu initiieren. Dieses Detektionsmodul kann ein und/oder mehrere zuvor als auch nachfolgend beschriebene Details aufweisen.

Ferner betrifft die Erfindung die Verwendung eines Datenbanksystems, welches Feldpositionen von unbeweglichen Hindernisobjekten in Form von Freileitungsmasten, insbesondere in Form von Mastschaften der Freileitungsmasten, aufweist, mit einer landwirtschaftlichen Arbeitsmaschine und einem Detektionsmodul, um eine Vorwarnung mittels einer Vorwarnungsvorrichtung zu erzeugen. Dieses Datenbanksystem und/oder die landwirtschaftliche Arbeitsmaschine kann ein und/oder mehrere zuvor als auch nachfolgend beschriebene Details aufweisen.

Ferner betrifft die Erfindung die Verwendung von in einem Datenbanksystem hinterlegten Feldpositionen von unbeweglichen Hindernisobjekten, die insbesondere satellitenbasiert erfasst wurden, in Form von Freileitungsmasten, insbesondere in Form von Mastschaften der Freileitungsmasten, welche auf landwirtschaftlichen Feldern vorhanden sind, in einer landwirtschaftlichen Arbeitsmaschine mittels eines Detektionsmoduls, um mittels einer Vorwarnungsvorrichtung innerhalb einer Fahrerkabine für einen menschlichen Nutzer eine akustisch und/oder optisch erfassbare Vorwarnung zu erzeugen. Das Datenbanksystem und/oder die landwirtschaftliche Arbeitsmaschine und/oder die Vorwarnungsvorrichtung kann ein und/oder mehrere zuvor als auch nachfolgend beschriebene Details aufweisen.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: ein landwirtschaftliches Feld mit mehreren Freileitungsmasten, und
- Fig. 2: eine erfindungsgemäße landwirtschaftliche Arbeitsmaschine beim Einsatz auf einem landwirtschaftlichen Feld, und
- Fig. 3: einen kreisförmigen POI in einer digitalen Karte des landwirtschaftlichen Feldes, und
- Fig. 4: einen auf einen Mastschaft eines Freileitungsmastes angepassten POI in der digitalen Karte des landwirtschaftlichen Feldes.

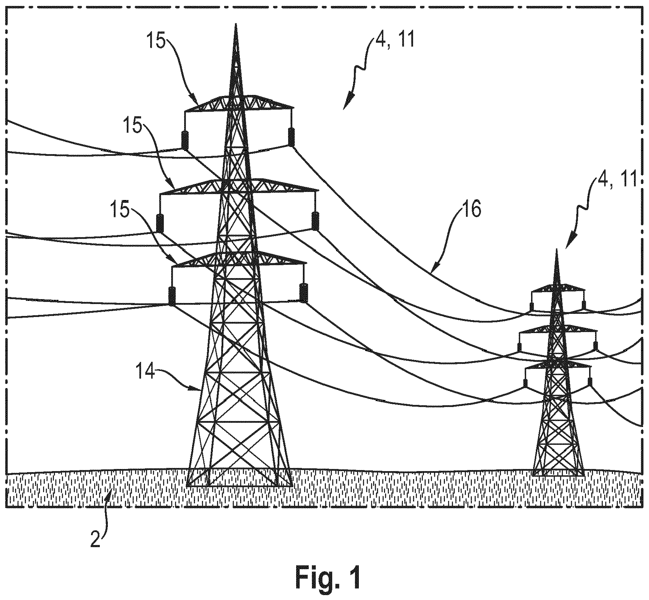

Fig. 1 zeigt beispielhaft ein landwirtschaftliches Feld 2 mit zwei unbeweglichen Hindernisobjekten 4, die jeweils als Freileistungsmast 11 ausgebildet sind. Ein solcher Freileistungsmast 11 umfasst einen Mastschaft 14, der mit einem Ende im Erdboden des landwirtschaftlichen Feldes 2 angeordnet ist und mit einem weiteren Ende vom Erdboden des landwirtschaftlichen Feldes 2 beabstandet ist. An diesem Mastschaft 14 sind mehrere Traversen 15 zur Halterung von elektrischen Leitungen 16 ausgebildet.

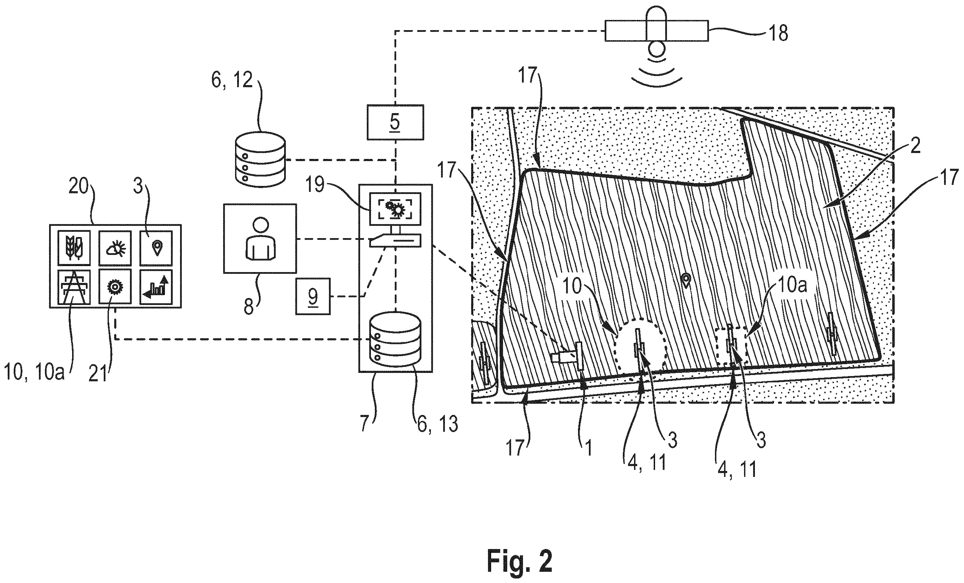

Die Fig. 2 zeigt eine erfindungsgemäße landwirtschaftliche Arbeitsmaschine 1 während Einsatzes auf dem landwirtschaftlichen Feld 2, welches durch die Feldgrenzen 17 begrenzt ist und an mehreren Feldpositionen 3 jeweils ein unbewegliches Hindernisobjekt 4 in Form eines Freileistungsmastes 11 der Fig. 1 aufweist. Diese landwirtschaftliche Arbeitsmaschine 1 kann, wie beispielhaft angedeutet, als selbstfahrende landwirtschaftliche Arbeitsmaschine in Form eines selbstfahrenden Mähdreschers ausgebildet sein. Diese landwirtschaftliche Arbeitsmaschine 1 kann auch als selbstfahrender Feldhäcksler oder als Traktor ausgebildet sein.

Die landwirtschaftliche Arbeitsmaschine 1 weist eine Positionsbestimmungseinrichtung 5 zur satellitenbasierten Erfassung einer Position der landwirtschaftlichen Arbeitsmaschine 1 bezüglich des landwirtschaftlichen Feldes 2 auf. Diese Positionsbestimmungseinrichtung 5 ist zur Positionsbestimmung mittels Satellitennavigationssignalen ausgebildet, um Positionsdaten bereitzustellen. In der Fig. 2 ist eine Satellitenvorrichtung in Form eines Satelliten 18 zur Positionsbestimmung der landwirtschaftlichen Arbeitsmaschine 1 bezüglich landwirtschaftlichen Feldes 2 angedeutet. Eine solche Satellitenvorrichtung kann einen und/oder mehrere GNSS-Satelliten umfassen. Die Satellitenvorrichtung kann NAVSTAR-GPS-, GLONASS-, Galileo, Beidou-, GPS- und/oder Galileo-Satelliten umfassen. Die Positionsbestimmungseinrichtung 5 kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer nicht dargestellten stationären Bodenstation eingesetzt wird, um die Position der landwirtschaftlichen Arbeitsmaschine 1 auf dem landwirtschaftlichen Feld 2 zu ermitteln. Hierbei kann die nicht dargestellte stationäre Bodenstation außerhalb des landwirtschaftlichen Feldes 2 angeordnet sein.

Die landwirtschaftliche Arbeitsmaschine 1 umfasst eine nicht dargestellte Fahrerkabine für den menschlicher Nutzer 8 bzw. Landwirt, wobei in dieser Fahrerkabine eine Vorwarnungsvorrichtung 9 ausgebildet ist, die dazu vorgesehen ist, innerhalb der nicht dargestellten Fahrerkabine eine für den menschlichen Nutzer 8 akustisch und/oder optisch erfassbare Vorwarnung zu erzeugen. Der menschlichen Nutzer 8 befindet sich während des Einsatzes der landwirtschaftlichen Arbeitsmaschine 1 innerhalb der nicht dargestellten Fahrerkabine.

Die landwirtschaftliche Arbeitsmaschine 1 weist ein Detektionsmodul 7 auf, welches dazu vorgesehen und eingerichtet ist, in Abhängigkeit von in einem Datenbanksystem 6 hinterlegten Feldpositionen 3 der unbeweglichen Hindernisobjekte 4 und der mittels der Positionsbestimmungseinrichtung 5 erfassten Position der landwirtschaftlichen Arbeitsmaschine 1 für einen menschlichen Nutzer 8 der landwirtschaftlichen Arbeitsmaschine 1 eine Vorwarnung mittels der Vorwarnungsvorrichtung 9 steuerungstechnisch und/oder regelungstechnisch zu initiieren. Das Detektionsmodul 7 kann eine Recheneinheit 19 und eine interne Datenbank 13 aufweisen. Die Feldpositionen 3 der unbeweglichen Hindernisobjekte 4 in Form von Freileitungsmasten 11 bezüglich des landwirtschaftlichen Feldes 2 können in der internen Datenbank 13 und/oder der externen Datenbank 12 des Datenbanksystem 6 hinterlegt sein.

Das externe Datenbanksystem 12 ist außerhalb der landwirtschaftlichen Arbeitsmaschine 1 als auch außerhalb des landwirtschaftlichen Feldes 2 ausgebildet und die interne Datenbank 13 ist innerhalb der landwirtschaftlichen Arbeitsmaschine 1 ausbildet. Die landwirtschaftliche Arbeitsmaschine 1 kann mit dem externen Datenbanksystem 12 für eine Datenübertragung kommunizieren und eine Teilmenge, der im externen Datenbanksystem 12 hinterlegten Feldpositionen 3 zu ermitteln, um diese Teilmenge im Datensatz 20 der internen Datenbank 13 innerhalb der landwirtschaftlichen Arbeitsmaschine 1 zu speichern. Dies hat den Vorteil, dass im Falle eines Datenübertragungsproblems während des Einsatzes auf dem landwirtschaftlichen Feld 2 stets die Feldpositionen 3 bezüglich der unbeweglichen Hindernisobjekte 4 für das Detektionsmodul 7 vorhanden sind.

Die im Datenbanksystem 6 hinterlegte Feldposition 3 des unbeweglichen Hindernisobjektes 4 kann sich auf einen Teilbereich, insbesondere lediglich auf einen Teilbereich, dieses unbeweglichen Hindernisobjektes 4 beziehen. Hierbei kann sich die im Datenbanksystem 6 hinterlegte Feldposition 3 des unbeweglichen Hindernisobjektes 4 auf den Mastschaft 14 des Freileitungsmastes 11 beziehen. Durch diese Reduzierung der Daten des Datenbanksystems 6 wird die erforderlichen Datenspeichermenge reduziert als auch die Verarbeitung der Daten beschleunigt. Außerdem wird hierdurch u.a. die Hinterlegung und/oder Erfassung von relevanten Konstruktionsdaten für Freileitungsmasten 11 vereinfacht.

Es kann vorgesehen sein, dass das Detektionsmodul 7 die Vorwarnung mittels der Vorwarnungsvorrichtung 9 initiiert, falls eine Beabstandung zwischen der Feldposition 3 des unbeweglichen Hindernisobjektes 4 und der Position der landwirtschaftlichen Arbeitsmaschine 1 einen Grenzwert unterschreitet.

Das Detektionsmodul 7 kann dazu vorgesehen und eingerichtet sein, insbesondere ausgebildet und/oder programmiert sein, diesen Grenzwert in Abhängigkeit von Eigenschaften, insbesondere Einstellungsparametern 21, der landwirtschaftliche Arbeitsmaschine 1 und/oder in Abhängigkeit von Eigenschaften, insbesondere der Ausgestaltung, des unbeweglichen Hindernisobjekts 4 einzustellen und/oder auszuwählen.

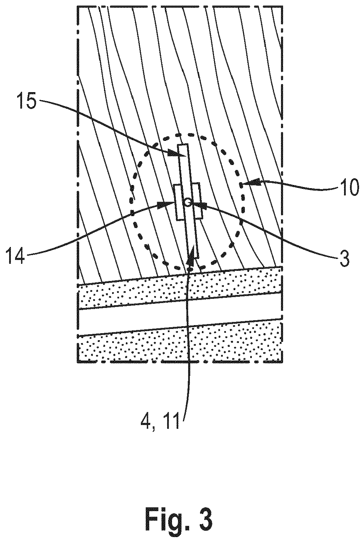

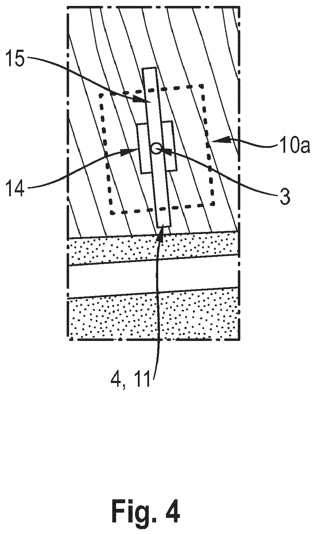

Alternativ oder zusätzlich kann das Detektionsmodul 7, wie in der Fig. 3 und Fig. 4 angedeutet, die in der Datenbanksystem 6 hinterlegte Feldposition 3 des unbeweglichen Hindernisobjektes 4 mit einem zweidimensionalen Modell 10, insbesondere mit einem in eine zweidimensionale Ebene projizierten dreidimensionalen Modell 10, des unbeweglichen Hindernisobjektes 4 verknüpfen und die Vorwarnung mittels der Vorwarnungsvorrichtung 9 initiieren, falls die mittels der Positionsbestimmungseinrichtung 5 erfasste Position der landwirtschaftlichen Arbeitsmaschine 1 innerhalb des Bereiches des zweidimensionalen Modells 10 des unbeweglichen Hindernisobjektes 4 liegt und/oder falls eine Beabstandung zwischen dem des zweidimensionalen Modell 10 des unbeweglichen Hindernisobjektes 4 und der Position der landwirtschaftlichen Arbeitsmaschine 1 einen Grenzwert unterschreitet.

In der Fig. 3 ist das zweidimensionale Modell 10 eine geschlossene Kurve in Form eines Kreises, innerhalb dessen die Feldposition 3 des unbeweglichen Hindernisobjektes 4 angeordnet ist. In der Fig. 4 basiert das zweidimensionale Modell 10 des unbeweglichen Hindernisobjektes 4 auf einem digitalen Model, welches geometrischen Ausgestaltung der Mastschaft 14 des unbeweglichen Hindernisobjektes 4 in Form des Freileitungsmasten 11 betrifft.

Die Positionsbestimmungseinrichtung 5 kann dazu vorgesehen und eingerichtet sein, einen Qualitätswert bezüglich der satellitenbasierten Erfassung der Position der landwirtschaftlichen Arbeitsmaschine 1 zu ermitteln und dem Detektionsmodul 7 diesen Qualitätswert zu übermitteln, wobei das Detektionsmodul 7 dazu vorgesehen und eingerichtet sein kann, den Grenzwert bezüglich der Beabstandung und/oder den Bereich des zweidimensionalen Modells 8 in Abhängigkeit des Qualitätswertes anzupassen.

Wie in den Fig. 2, Fig. 3 und Fig.4 mit Kreisen angedeutet, kann ein nicht dargestelltes Navigationssystem dazu vorgesehen und eingerichtet sein, die in dem Datenbanksystem 6 hinterlegte Feldposition 3 des unbeweglichen Hindernisobjektes 4 als Point of Interest bzw. POI in einer digitalen Karte des landwirtschaftlichen Feldes 2, auf welchem sich die landwirtschaftliche Arbeitsmaschine 1 im Einsatz befindet, für den menschlicher Nutzer 8 optisch sichtbar darzustellen.

### Bezugszeichenliste

- 1: landwirtschaftliche Arbeitsmaschine
- 2: landwirtschaftliches Feld
- 3: Feldposition
- 4: unbewegliches Hindernisobjekt
- 5: Positionsbestimmungseinrichtung
- 6: Datenbanksystem
- 7: Detektionsmodul
- 8: menschlicher Nutzer
- 9: Vorwarnungsvorrichtung
- 10: Modell des Hindernisobjekts
- 11: Freileitungsmast
- 12: Externe Datenbank
- 13: Interne Datenbank
- 14: Mastschaft
- 15: Traverse
- 16: elektrische Leitung
- 17: Feldgrenze
- 18: Satellit
- 19: Recheneinheit
- 20: Datensatz
- 21: Einstellungsparameter der landwirtschaftlichen Arbeitsmaschine

## Patentansprüche

1. Landwirtschaftliche Arbeitsmaschine (1) zum Einsatz auf einem landwirtschaftlichen Feld (2), welches an einer Feldposition (3) wenigstens ein unbewegliches Hindernisobjekt (4) aufweist,
- wobei die landwirtschaftliche Arbeitsmaschine (1) eine Positionsbestimmungseinrichtung (5) zur satellitenbasierten Erfassung einer Position der landwirtschaftlichen Arbeitsmaschine (1) bezüglich des landwirtschaftlichen Feldes (2) aufweist,
**dadurch gekennzeichnet,**
- **dass** die Feldposition (3) des unbeweglichen Hindernisobjektes (4) in einem Datenbanksystem (6) hinterlegt ist, und
- **dass** die landwirtschaftliche Arbeitsmaschine (1) ein Detektionsmodul (7) aufweist, welches dazu vorgesehen und eingerichtet ist, in Abhängigkeit der in dem Datenbanksystem (6) hinterlegten Feldposition (3) des unbeweglichen Hindernisobjektes (4) und der mittels der Positionsbestimmungseinrichtung (5) erfassten Position der landwirtschaftlichen Arbeitsmaschine (1) für einen menschlichen Nutzer (8) der landwirtschaftlichen Arbeitsmaschine (1) eine Vorwarnung mittels einer Vorwarnungsvorrichtung (9) zu initiieren.

2. Landwirtschaftliche Arbeitsmaschine (1) nach Anspruch 1,
**dadurch gekennzeichnet,**
**dass** das Detektionsmodul (7) die Vorwarnung mittels der Vorwarnungsvorrichtung (9) initiiert, falls eine Beabstandung zwischen der Feldposition (3) des unbeweglichen Hindernisobjektes (4) und der Position der landwirtschaftlichen Arbeitsmaschine (1) einen Grenzwert unterschreitet.

3. Landwirtschaftliche Arbeitsmaschine (1) nach Anspruch 1 oder 2,
**dadurch gekennzeichnet,**
**dass** das Detektionsmodul (7) die in der Datenbanksystem (6) hinterlegte Feldposition (3) des unbeweglichen Hindernisobjektes (4) mit einem zweidimensionalen Modell (10), insbesondere mit einem in eine zweidimensionale Ebene projizierten dreidimensionalen Modell (10), des unbeweglichen Hindernisobjektes (4) verknüpft und die Vorwarnung mittels der Vorwarnungsvorrichtung (9) initiiert, falls die mittels der Positionsbestimmungseinrichtung (5) erfasste Position der landwirtschaftlichen Arbeitsmaschine (1) innerhalb des Bereiches des zweidimensionalen Modells (10) des unbeweglichen Hindernisobjektes (4) liegt und/oder falls eine Beabstandung zwischen dem des zweidimensionalen Modell (10) des unbeweglichen Hindernisobjektes (4) und der Position der landwirtschaftlichen Arbeitsmaschine (1) einen Grenzwert unterschreitet.

4. Landwirtschaftliche Arbeitsmaschine (1) nach Anspruch 2 oder 3,
**dadurch gekennzeichnet,**
- **dass** die Positionsbestimmungseinrichtung (5) dazu vorgesehen und eingerichtet ist, einen Qualitätswert bezüglich der satellitenbasierten Erfassung der Position der landwirtschaftlichen Arbeitsmaschine (1) zu ermitteln und dem Detektionsmodul (7) diesen Qualitätswert zu übermitteln,
- wobei das Detektionsmodul (7) dazu vorgesehen und eingerichtet ist, den Grenzwert bezüglich der Beabstandung und/oder den Bereich des zweidimensionalen Modells (8) in Abhängigkeit des Qualitätswertes anzupassen.

5. Landwirtschaftliche Arbeitsmaschine (1) nach einem der vorhergehenden Ansprüche,
**dadurch gekennzeichnet,**
**dass** das bezüglich des landwirtschaftlichen Feldes (2) unbewegliche Hindernisobjekt (4) einen Freileitungsmast (11) ausbildet.

6. Landwirtschaftliche Arbeitsmaschine (1) nach einem der vorhergehenden Ansprüche,
**dadurch gekennzeichnet,**
- **dass** die landwirtschaftliche Arbeitsmaschine (1) eine Fahrerkabine für den menschlicher Nutzer (8) aufweist,
- wobei in der Fahrerkabine die Vorwarnungsvorrichtung (9) ausgebildet ist, die dazu vorgesehen als auch eingerichtet ist, bei einer Initiierung durch das Detektionsmodul (7) innerhalb der Fahrerkabine eine für den menschlichen Nutzer (8) akustisch und/oder optisch erfassbare Vorwarnung zu erzeugen.

7. Landwirtschaftliche Arbeitsmaschine (1) nach einem der vorhergehenden Ansprüche,
**dadurch gekennzeichnet,**
**dass** ein Navigationssystem dazu vorgesehen und eingerichtet ist, die in dem Datenbanksystem (6) hinterlegte Feldposition (3) des unbeweglichen Hindernisobjektes (4) als Point of Interest (POI) in einer digitalen Karte des landwirtschaftlichen Feldes (2), auf welchem sich die landwirtschaftliche Arbeitsmaschine (1) im Einsatz befindet, für den menschlicher Nutzer (8) optisch sichtbar darzustellen.

8. Landwirtschaftliche Arbeitsmaschine (1) nach einem der vorhergehenden Ansprüche,
**dadurch gekennzeichnet,**
- **dass** das Datenbanksystem (6) ein externes Datenbanksystem (12) außerhalb der landwirtschaftlichen Arbeitsmaschine (1) ausbildet, und/oder
- **dass** das Datenbanksystem (6) ein internes Datenbanksystem (13) innerhalb der landwirtschaftlichen Arbeitsmaschine (1) ausbildet.

9. Landwirtschaftliche Arbeitsmaschine (1) nach einem der vorhergehenden Ansprüche,
**dadurch gekennzeichnet,**
**dass** die landwirtschaftliche Arbeitsmaschine (1) als selbstfahrende landwirtschaftliche Arbeitsmaschine, insbesondere als selbstfahrender Feldhäcksler oder als selbstfahrender Mähdrescher, für den landwirtschaftlichen Einsatz auf dem landwirtschaftlichen Feld (2) ausgebildet ist.

10. Landwirtschaftliche Arbeitsmaschine (1) nach einem der Ansprüche 1 bis 8,
**dadurch gekennzeichnet,**
**dass** die landwirtschaftliche Arbeitsmaschine (1) als Traktor, insbesondere als Traktor mit einem Anbaugerät, für den landwirtschaftlichen Einsatz auf dem landwirtschaftlichen Feld (2) ausgebildet ist.

11. Landwirtschaftliche Arbeitsmaschine (1) nach einem der vorhergehenden Ansprüche,
**dadurch gekennzeichnet,**
**dass** sich die im Datenbanksystem (6) hinterlegte Feldposition (3) des unbeweglichen Hindernisobjektes (4) auf einen Teilbereich dieses unbeweglichen Hindernisobjektes (4) bezieht.

12. Landwirtschaftliche Arbeitsmaschine (1) nach einem der vorhergehenden Ansprüche,
**dadurch gekennzeichnet,**
**dass** sich die im Datenbanksystem (6) hinterlegte Feldposition (3) des unbeweglichen Hindernisobjektes (4) auf einen Mastschaft (14) eines Freileitungsmasts (11) bezieht.

13. Detektionsmodul (7) einer landwirtschaftliche Arbeitsmaschine (1) nach einem der vorhergehenden Ansprüche, welches dazu vorgesehen und eingerichtet ist, in Abhängigkeit der in dem Datenbanksystem (6) hinterlegten Feldposition (3) des unbeweglichen Hindernisobjektes (4) und der mittels der Positionsbestimmungseinrichtung (5) erfassten Position der landwirtschaftlichen Arbeitsmaschine (1) für einen menschlichen Nutzer (8) der landwirtschaftlichen Arbeitsmaschine (1) eine Vorwarnung mittels einer Vorwarnungsvorrichtung (9) zu initiieren.

14. Verwendung eines Datenbanksystems (6), welches Feldpositionen (3) von unbeweglichen Hindernisobjekten (4) in Form von Freileitungsmasten (11), insbesondere in Form von Mastschaften (14) der Freileitungsmasten (11), aufweist, mit einer landwirtschaftlichen Arbeitsmaschine (1), insbesondere nach einem der Ansprüche 1 bis 12, und einem Detektionsmodul (7), um eine Vorwarnung mittels einer Vorwarnungsvorrichtung (9) zu erzeugen.

15. Verwendung von in einem Datenbanksystem (6) hinterlegten Feldpositionen (3) von unbeweglichen Hindernisobjekten (4) in Form von Freileitungsmasten (11), insbesondere in Form von Mastschaften (14) der Freileitungsmasten (11), welche auf landwirtschaftlichen Feldern (2) vorhanden sind, in einer landwirtschaftlichen Arbeitsmaschine (1), insbesondere nach einem der Ansprüche 6 bis 12, mittels eines Detektionsmoduls (7), um mittels einer Vorwarnungsvorrichtung (9) innerhalb einer Fahrerkabine für einen menschlichen Nutzer (8) eine akustisch und/oder optisch erfassbare Vorwarnung zu erzeugen.
